# EUROPEAN PATENT APPLICATION

(11) **EP 2 719 550 A1**
(43) Date of publication of application: **16.04.2014**
(21) Application number: 12797024.2
(22) Date of filing: 24.02.2012
(51) Int. Cl.: B60C 5/14

(54) **PNEUMATIC TIRE**

(30) Priority: 09.06.2011 JP 2011128865
(71) Applicant: The Yokohama Rubber Co., Ltd., Minato-ku Tokyo 105-8685 (JP)
(72) Inventor: ENDO, Toyoaki, Kanagawa 2548601 (JP); HASHIMURA, Yoshiaki, Kanagawa 2548601 (JP); SETO, Hideki, Kanagawa 2548601 (JP); MATSUDA, Jun, Kanagawa 2548601 (JP)
(74) Representative: Hards, Andrew
(86) International application number: PCT/JP2012/054567
(87) International publication number: WO 2012/169234

(57) **Abstract**

The present invention provides a pneumatic tire which uses, as a as an inner liner layer, a laminated sheet obtained by laminating a tie rubber layer and an air permeation preventing layer made of any one of a thermoplastic resin and a thermoplastic elastomer composition containing a blend of the thermoplastic resin and an elastomer, and which has excellent durability making it possible to prevent the tie rubber layer from being cracked around a splice portion of the laminated sheet after the tire starts to be used.

The pneumatic tire of the present invention includes, as an inner liner layer, a laminated sheet obtained by laminating a tie rubber layer laminate and an air permeation preventing layer made of any one of a thermoplastic resin and thermoplastic elastomer composition containing a blend of the thermoplastic resin and an elastomer, and a perforated portion penetrating the air permeation preventing layer is formed within a range of 25 mm, on at least either side in a tire circumferential direction, from a cavity-side end A of a splice portion of the air permeation preventing layer.

## Description

### [TECHNICAL FIELD]

The present invention relates to a pneumatic tire.

More specifically, the present invention relates to a pneumatic tire which uses, as an inner liner layer, a laminated sheet obtained by laminating a tie rubber layer and an air permeation preventing layer made of any one of a thermoplastic resin and a thermoplastic elastomer composition containing a blend of the thermoplastic resin and an elastomer, and which has excellent durability making it possible to prevent the tie rubber layer from being cracked around a splice portion of the laminated sheet after the tire starts to be used.

### [BACKGROUND ART]

In recent years, pneumatic tires have been proposed and studied which use, as an inner liner layer, a laminated sheet obtained by laminating a tie rubber layer and an air permeation preventing layer made of a thermoplastic resin or a thermoplastic elastomer composition containing a blend of the thermoplastic resin and an elastomer (Patent Document 1).

To manufacture such a pneumatic tire, a manufacturing method is generally employed in which a laminated sheet including a sheet-shaped material for an air permeation preventing layer made of a thermoplastic resin or a thermoplastic elastomer composition obtained by blending the thermoplastic resin and an elastomer, and a rubber (tie rubber) sheet to be cured and adhere to the thermoplastic resin or the thermoplastic elastomer composition obtained by blending the thermoplastic resin and the elastomer, is wound around a tire making drum and lap spliced and is then subjected to a tire cure-molding process.

A pneumatic tire may be manufactured by: pulling out the laminated sheet, which is wound into a rolled shape, by a predetermined length from the rolled shape; cutting the laminated sheet in the length; winding the laminated sheet around a tire making drum; lap splicing the laminated sheet on the drum; and further cure-molding the laminated sheet to form an inner liner layer. In this case, however, after the tire starts to be used for driving, the sheet of the thermoplastic resin or the thermoplastic elastomer composition and the tie rubber cured and having adhered to the sheet of the thermoplastic resin or the thermoplastic elastomer composition, which constitute the inner liner layer, may be delaminated from each other due to a crack that occurs around a splice portion therebetween.

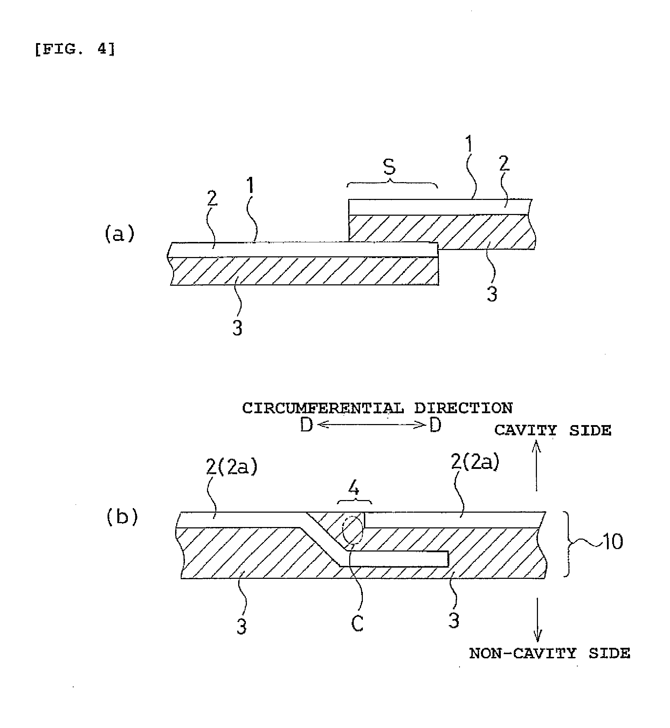

To explain this with drawings, as shown in Part (a) of Fig. 4, a laminated sheet 1 including a tie rubber layer 3 and a sheet 2 made of a thermoplastic resin or a thermoplastic elastomer composition obtained by blending the thermoplastic resin and an elastomer is cut to a desired size (length) with an edge tool. Then, the laminated sheet 1 is lap spliced on a tire making drum (unillustrated) in such an annular shape that both end portions thereof form a lap splice portion S. Moreover, other parts (unillustrated) necessary for manufacturing the tire are wound and the cure-molding is performed with a bladder. As a result of the cure-molding, an inner liner layer 10 is formed which includes the tie rubber layer 3 and the sheet 2 made of the thermoplastic resin or the thermoplastic elastomer composition obtained by blending the thermoplastic resin and the elastomer as shown in the view in Part (b) of Fig. 4 as a model. Around the lap splice portion S, there are formed portions where the sheet 2 made of the thermoplastic resin or the above-mentioned thermoplastic elastomer composition is exposed and where the sheet 2 is buried inside the tie rubber layer. This sheet 2 made of the thermoplastic resin or the above-mentioned thermoplastic elastomer composition constitutes an air permeation preventing layer 2a. In the drawing, the direction indicated by an arrow D is the tire circumferential direction.

Moreover, the phenomenon in which the sheet 2 (air permeation preventing layer 2a) made of the above-mentioned thermoplastic resin or thermoplastic elastomer composition and the tie rubber layer 3 cured and adhered thereto are delaminated from each other after the tire starts to be used occurs particularly at a spot covering a portion where the sheet 2 (air permeation preventing layer 2a) made of the thermoplastic resin or the thermoplastic elastomer composition is exposed and a portion 4 near the tip of the sheet 2, for example, shown in Part (b) of Fig. 4. In the beginning, a crack occurs between the tie rubber layer 3 and the sheet 2 (air permeation preventing layer 2a) made of the thermoplastic resin or the thermoplastic elastomer composition, and the crack may further grow, leading to the delamination phenomenon.

A cause for this phenomenon, specifically, a cause for the occurrence of a crack between (on an interface of) the air permeation preventing layer 2a and the tie rubber layer 3 is presumed to be the fact that the air permeation preventing layer 2a, formed of the sheet of the thermoplastic resin or the thermoplastic elastomer composition, usually has high rigidity. Accordingly, a portion of the tie rubber layer is sandwiched vertically and fixed by ends of the air permeation preventing layer 2a, and strain thereof is suppressed. On the other hand, a portion of the tie rubber layer in the portion 4 near the tip of the air permeation preventing layer 2a is not sandwiched vertically by the ends of the air permeation preventing layer 2a, strain thereof cannot be suppressed, and a large stress occurs as a consequence. Moreover, the crack occurrence is presumably attributable to a situation where cure adhesion may not be sufficiently high between the tie rubber layer and the sheet made of the thermoplastic resin or the thermoplastic elastomer composition, and so on.

On the other hand, when the cure adhesion is sufficiently high between the tie rubber layer and the sheet 2 made of the thermoplastic resin or the thermoplastic elastomer composition, strain by stress is concentrated on and around a spot inside the tie rubber layer 3 indicated by C in Part (b) of Fig. 4, thereby frequently causing cracks. The strain by stress is concentrated on and around the above-mentioned spot indicated by C in Part (b) of Fig. 4 where the tie rubber layer 3 is exposed to the surface. The strain by stress having the direction of strain in conformity to the tire circumferential direction is generated in the aforementioned spot in the tie rubber layer 3. This is considered as a cause of the crack occurrence around the spot C in the tie rubber layer 3.

### [Citation List]

### [Patent Literature]

[PTL1] JP 2009-241855 A

### [Summary of Invention]

### [Technical Problem]

In view of the above-mentioned circumstance, an object of the present invention is to provide a pneumatic tire which uses, as an inner liner layer, a laminated sheet obtained by laminating a tie rubber layer and an air permeation preventing layer made of any one of a thermoplastic resin and a thermoplastic elastomer composition containing a blend of the thermoplastic resin and an elastomer, and which has excellent durability making it possible to prevent the tie rubber layer from being cracked around a splice portion of the laminated sheet after the tire starts to be used.

### [Solution to Problem]

A pneumatic tire of the present invention to achieve the above-described object has the following configuration (1).
(1) A pneumatic tire which uses, as an inner liner layer, a laminated sheet obtained by laminating a tie rubber layer and an air permeation preventing layer made of any one of a thermoplastic resin and a thermoplastic elastomer composition containing a blend of the thermoplastic resin and an elastomer, characterized in that a perforated portion penetrating the air permeation preventing layer is formed within a range of 25 mm, on at least either side in a tire circumferential direction, from a cavity-side end A of a splice portion of the air permeation preventing layer.

Such a pneumatic tire of the present invention preferably has a configuration of any one of (2) and (3) given below.
(2) The pneumatic tire according to (1), characterized in that a total of lengths, in a tire widthwise direction, of the perforated portions formed within the range of 25 mm, on at least either side in the tire circumferential direction, from the cavity-side end A of the splice portion of the air permeation preventing layer is no less than 2% of a length of the air permeation preventing layer in the widthwise direction.
(3) The pneumatic tire according to any one of (1) and (2), characterized in that
   the pneumatic tire comprises at least one belt layer at a tire outer circumferential side of the inner liner layer, and
   the perforated portion is formed in the air permeation preventing layer in regions covering a width of at least 60 mm respectively from both ends, in the tire widthwise direction, of a belt layer with the largest belt width toward bead parts.

### [Advantageous Effects of Invention]

The present invention according to claim 1 makes it possible to provide a pneumatic tire which uses, as an inner liner layer, a laminated sheet obtained by laminating a tie rubber layer and a air permeation preventing layer made of any one of a thermoplastic resin and a thermoplastic elastomer composition containing a blend of the thermoplastic resin and an elastomer, and which has excellent durability making it possible to well prevent the tie rubber layer from being crack around a splice portion of the laminated sheet after the tire starts to be used.

The pneumatic tire of the present invention according to any one of claims 2 and 3 has the effect of the present invention according to claim 1, and can further achieve the effect more securely at a higher level.

### [Brief Description of Drawings]

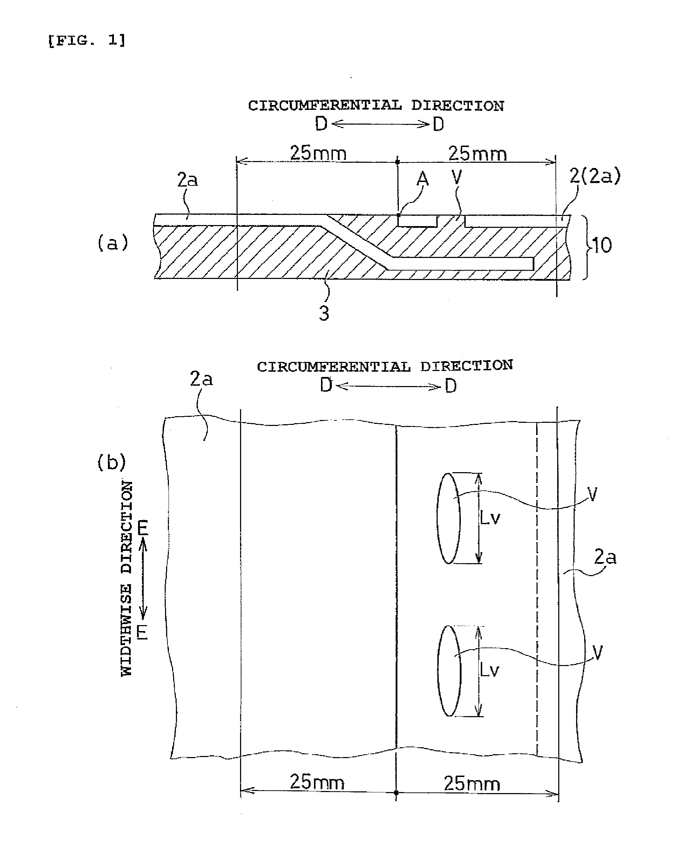

[Fig. 1] Part (a) of Fig. 1 is a side view showing, as a model, one example of an air permeation preventing layer and a tie rubber layer around a splice portion of an inner liner in a pneumatic tire according to the present invention, and Part (b) of Fig. 1 is a plan view thereof. This Fig. 1 shows an example where when ends of a laminated sheet including the air permeation preventing layer and the tie rubber layer are spliced together, perforated portions are provided in the vicinity of one of the ends.

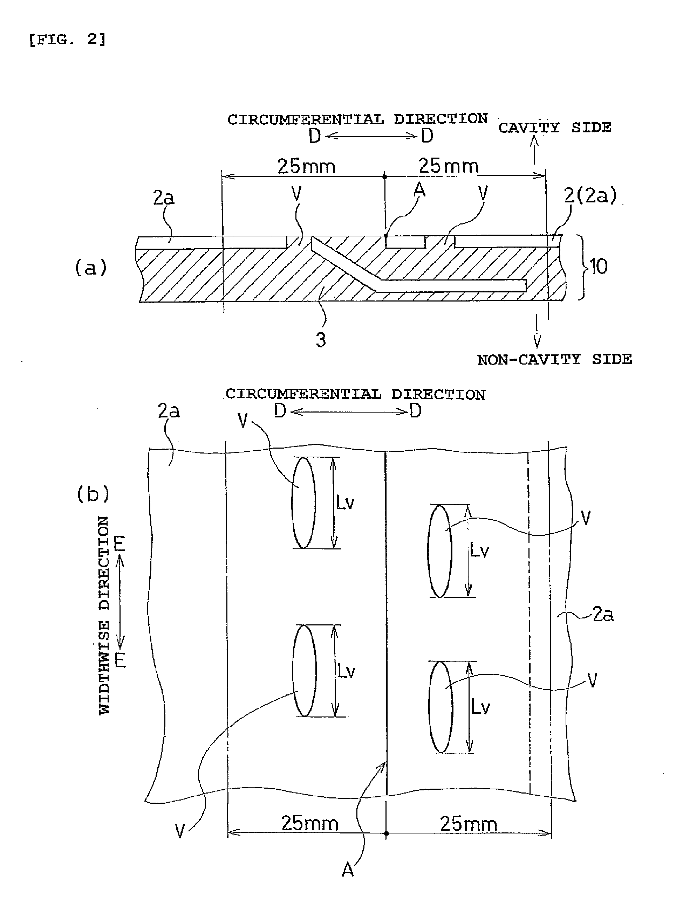

[Fig. 2] Part (a) of Fig. 2 is a side view showing, as amodel, another example of the air permeation preventing layer and the tie rubber layer around the splice portion of the inner liner in the pneumatic tire according to the present invention, and Part (b) of Fig. 2 is a plan view thereof. This Fig. 2 shows an example where when the ends of the laminated sheet including the air permeation preventing layer and the tie rubber layer are spliced together, perforated portions are provided in the vicinity of both of the ends.

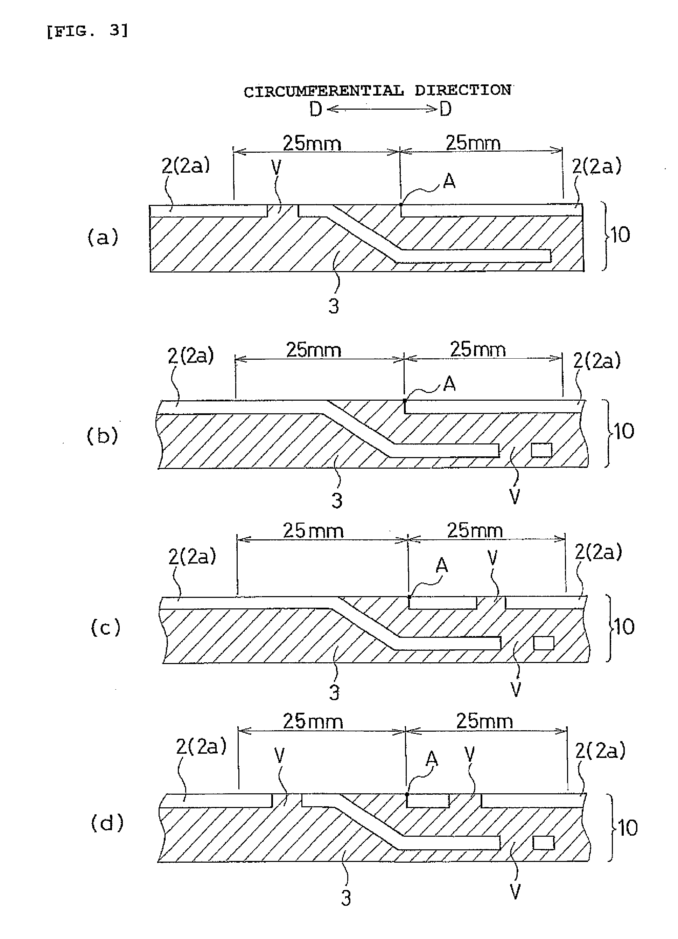

[Fig. 3] Parts (a) to (d) of Fig. 3 are side views showing, as a model, other examples of the air permeation preventing layer and the tie rubber layer around the splice portion of the inner liner in the pneumatic tire according to the present invention.
[Fig. 4] Part (a) of Fig. 4 is a view showing, as a model, a state where a laminated sheet 1 has both end portions lap spliced together, the laminated sheet 1 being obtained by: laminating a sheet 2 made of a thermoplastic resin or a thermoplastic elastomer composition, and rubber 3 to be cured and adhere to the thermoplastic resin or the thermoplastic elastomer composition; cutting the laminated sheet 1 at a predetermined length; and winding the laminated sheet 1 around a tire making drum. Part (b) of Fig. 4 is a view showing, as a model, a state after cure-molding is performed in the state shown in Part (a) of Fig. 4.

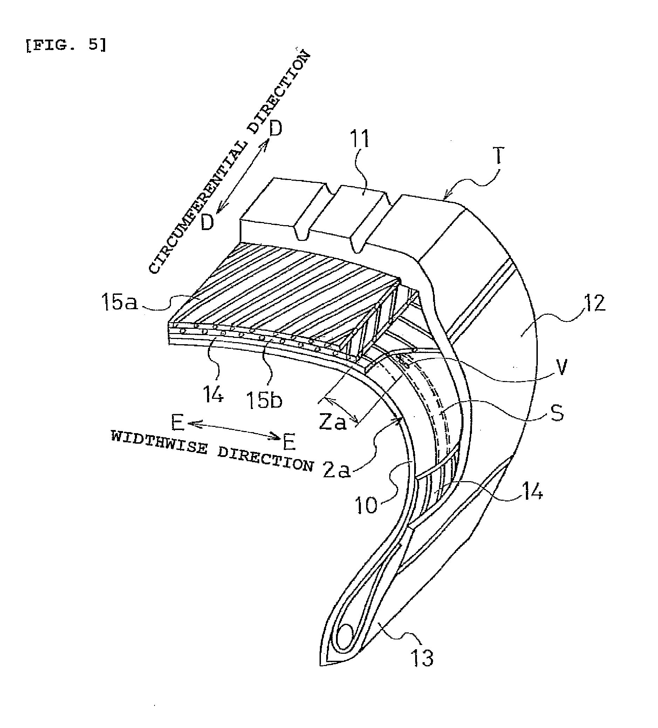

[Fig. 5] Fig. 5 is a partial cutaway perspective view showing one example of an embodiment of the pneumatic tire according to the present invention.

### [Description of Embodiments]

Hereinbelow, a pneumatic tire of the present invention will be described further in detail by using the drawings and the like.

As shown in Parts (a) and (b) of Fig. 1, the pneumatic tire of the present invention is a pneumatic tire which uses, as an inner liner layer 10, a laminated sheet 1 obtained by laminating a laminate of tie rubber layer 3 and an air permeation preventing layer (2a) made of any one of a thermoplastic resin and a thermoplastic elastomer composition containing a blend of the thermoplastic resin and an elastomer, and is characterized in that a perforated portion V penetrating the air permeation preventing layer is formed within a range of 25 mm, on at least either side in a tire circumferential direction, from a cavity-side end A of a splice portion of the air permeation preventing layer. In the drawing, the direction of an arrow D indicates the tire circumferential direction, and the direction of an arrow E indicates a tire widthwise direction.

When the pneumatic tire is configured by forming the perforated portion V in the air permeation preventing layer 2a as described above, the presence of the perforated portion V makes it possible to appropriately distribute strain by stress generated in the air permeation preventing layer 2a, and to relieve the strain by stress. Accordingly, occurrence of a crack inside the tie rubber layer can be prevented as much as possible.

If the perforated portion V is provided only at a position out of the 25-mm ranges from the point A on both sides in the tire circumferential direction, and if the perforated portion V is not present within the 25-mm ranges, the effects of the strain distribution and relieve are small, making it difficult to obtain the effect of the present invention.

The perforated portion V is provided by perforating only the air permeation preventing layer 2a. In other words, the tie rubber layer is not perforated. The reason is that if the tie rubber layer 3 is perforated, the function as the inner liner layer to prevent air permeation is impaired at the portion.

The position where the perforated portion V is provided is and should be within the range of 25 mm, on at least either side in the tire circumferential direction, from the above-mentioned point A. Specifically, the perforated portion V is provided either forward or rearward of the point A within the ranges of 25 mm on both sides in the tire circumferential direction, or within the ranges on both the front and rear sides (within a range of 50 mm in total). If the perforated portion V is not present within the 25-mm ranges from the point A on both sides in the tire circumferential direction but present only beyond the 25-mm positions, it is difficult to obtain the effect of the present invention to prevent delamination and occurrence of a crack in the tie rubber layer around the splice portion.

Fig. 1 shows an example where when ends of the laminated sheet including the air permeation preventing layer and the tie rubber layer are spliced together, the perforated portion is provided in the vicinity of only one of the ends. In addition, Fig. 2 shows an example where when the ends of the laminated sheet including the air permeation preventing layer and the tie rubber layer are spliced together, the perforated portions are provided in the vicinity of both of the ends.

Various embodiments of the position where such a perforated portion V is provided will be described using Parts (a) to (d) of Fig. 3.

The position where the perforated portion V is provided may be in the air permeation preventing layer having the end A as shown in Fig. 1, or may be in the air permeation preventing layer located opposite to one having the point A at the end as shown in Part (a) of Fig. 3. The perforated portion V may be provided on both sides with the point A in between. Such an embodiment corresponds to that shown in Fig. 2 and that shown in Part (d) of Fig. 3.

Furthermore, when the air permeation preventing layer 2a overlaps with another as shown in Part (b) of Fig. 3, the perforated portion V may be provided in the air permeation preventing layer on a non-cavity side. Alternatively, when the air permeation preventing layer overlaps with another, both of the air permeation preventing layers on the the cavity side and the non-cavity side may be provided with the perforated portions V as shown in Part (c) of Fig. 3. Moreover, in the embodiment of Part (c) of Fig. 3, the perforated portions V may be further provided in the air permeation preventing layer located opposite to one having the end A, and Part (d) of Fig. 3 shows this embodiment.

Generally, in consideration of air leakage-preventing performance, the perforated portion V is preferably provided in an overlapping portion of the air permeation preventing layer 2a (Figs. 1, 2, and Part (c) of Fig. 3). Nevertheless, as shown in Part (b) of Fig. 3, in a case where the perforated portion is provided only in the overlapping portion of the air permeation preventing layer located on the lower side (non-cavity side), the effect of relieving strain by stress tends to be small. It is important to provide the perforated portion at least in the overlapping portion of the air permeation preventing layer located on the upper side (cavity side).

In the present invention, as to how much the perforated portion V is formed within the range of 25 mm, on at least either side in the tire circumferential direction, from the cavity-side end A of the splice portion of the air permeation preventing layer (percentage of perforated portions present), it is preferable that a total value of lengths Lv, in the tire widthwise direction, of perforated portions V formed within the region of 50 mm width be no less than 2% of the length of the air permeation preventing layer 2a in the widthwise direction (entire length). If the value is less than 2%, the effects of strain distribution and relieve are small, making it difficult to obtain the effect of the present invention.

Herein, the "percentage of perforated portions present" is a value defined by the following formula, where the denominator of the formula is a value of the entire width of the inner liner. According to this definition, when there are multiple rows of perforated portions (Fig. 2, Parts (c) and (d) of Fig. 3), the percentage of perforated portions present may exceed 100%.

Percentage of perforated portions present = {(total of projected lengths (Lv) of perforated portions V in tire widthwise direction)/(length of air permeation preventing layer in widthwise direction (entire length))} × 100 (%) Based on various findings of the present inventors, the percentage of perforated portions present (%) is further preferably 5% to 300% both inclusive, most preferably 15% to 80% both inclusive. Generally, the percentage should be 15% or higher but not higher than 30% from the viewpoints of operation efficiently and cost, and so forth.

The length Lv of the perforated portion V in the tire widthwise direction should be, on average, from 1 mm to 9 mm both inclusive, preferably 1 to 6 mm. If the value is too large, the perforated portions V are likely to be connected to each other, and delamination is likely to take place from the connected potion. Thus, such lengths are not preferable.

Furthermore, when the pneumatic tire has at least one belt layer 15 (in the drawing, two layers 15a, 15b) at the tire outer circumferential side of the air permeation preventing layer 2a as shown in Fig. 5, the perforated portion V is preferably formed at least in the air permeation preventing layer 2a in regions Za covering a width of at least 60 mm respectively from both ends, in the tire widthwise direction, of the belt layer 15b with the largest belt width toward bead parts 13. This is because strain by stress is generated frequently in regions extending from portions near both ends of the belt layer 15, where the belt layer 15 ends, toward the bead parts 13, making it possible to exhibit the effect of the present invention at a higher level.

In the present invention, the shape of the perforated portion V formed in the air permeation preventing layer 2a may be any of slit shape, elliptical shape, circle, polygon, and so forth, and is not particularly limited. The perforated portion V is preferably processed on a making drum by employing needle or punching processing, or using a slitter or the like.

Fig. 5 is a partial cutaway perspective view showing one example of the embodiment of the pneumatic tire according to the present invention.

A pneumatic tire T includes a side wall part 12 and the bead part 13 in a continuous fashion on each of the left and right sides of a tread part 11. Inside the tire, a carcass layer 14 serving as the tire's framework is provided extending in the tire widthwise direction between the left and right bead parts 13 and 13. The two belt layers 15a and 15b made of steel cords are provided on the outer circumferential side of a portion of a carcass layer 14 corresponding to the tread part 11. An arrow D indicates the tire circumferential direction like Figs. 1 to 4, and an arrow E indicates the tire widthwise direction. The inner liner layer 10 is disposed on the inner side of the carcass layer 14, and the lap splice portion S is present extending in the tire widthwise direction.

As the region of the air permeation preventing layer 2a according to the present invention where the perforated portion V is provided in the tire widthwise direction, the perforated portion V is most preferably, as described above, formed in the air permeation preventing layer 2a in the regions Za covering a length of at least 60 mm (widthwise direction) respectively from both the ends, in the tire widthwise direction, of the belt layer (15b in Fig. 5) with the largest belt width toward the bead parts 13. This is because strain by stress is generated most frequently in regions extending from portions near both the ends of the belt layer, where the belt layer ends, toward the bead parts. Accordingly, providing the perforated portion V at least in the regions makes it possible to exhibit the effect of the present invention favorably.

The pneumatic tire according to the present invention prevents occurrence of a crack in the tie rubber layer 3 on the tire's inner circumferential surface, which has been likely to occur around the lap splice portion S in the conventional case. Moreover, since the strain by stress around the lap splice portion S is relieved, such relief prevents the occurrence of a crack between the tie rubber layer 3 and the sheet 2 made of the thermoplastic resin or the thermoplastic elastomer composition, which form the inner liner layer 10. Thus, the durability is significantly improved as a whole.

Examples of the thermoplastic resin usable preferably in the present invention include: polyamide-based resins [for example, nylon 6 (N6), nylon 66 (N66), nylon 46 (N46), nylon 11 (N11), nylon 12 (N12), nylon 610 (N610), nylon 612 (N612), nylon 6/66 copolymers (N6/66), nylon 6/66/610 copolymers (N6/66/610), nylon MXD6 (MXD6), nylon 6T, nylon 9T, nylon 6/6T copolymers, nylon 66/PP copolymers, and nylon 66/PPS copolymers]; their N-alkoxyalkylates, for example, methoxymethylated nylon 6, methoxymethylated nylon 6/610 copolymers, and methoxymethylated nylon 612; polyester-based resins [for example, aromatic polyesters such as polybutylene terephthalate (PBT), polyethylene terephthalate (PET), polyethylene isophthalate (PEI), PET/PEI copolymers, polyarylate (PAR), polybutylene naphthalate (PBN), liquid crystal polyester, and polyoxyalkylene diimide diacid/polybutylene terephthalate copolymers]; polynitrile-based resins [for example, polyacrylonitrile (PAN), polymethacrylonitrile, acrylonitrile/styrene copolymers (AS), (meth)acrylonitrile/styrene copolymers, and (meth)acrylonitrile/styrene/butadiene copolymers]; polymethacrylate-based resins [for example, polymethyl methacrylate (PMMA) and polyethylmethacrylate]; polyvinyl-based resins [for example, polyvinyl acetate, polyvinyl alcohol (PVA), vinyl alcohol/ethylene copolymers (EVOH), polyvinylidene chloride (PVDC), polyvinyl chloride (PVC), vinyl chloride/vinylidene chloride copolymers, vinylidene chloride/methyl acrylate copolymers, and vinylidene chloride/acrylonitrile copolymers]; cellulose-based resins [for example, cellulose acetate and cellulose acetate butyrate]; fluororesins [for example, polyvinylidene fluoride (PVDF), polyvinyl fluoride (PVF), polychlorofluoroethylene (PCTFE), and tetrafluoroethylene/ethylene copolymers (ETFE)]; imide-based resins [for example, aromatic polyimide (PI)]; and the like.

Moreover, as for the thermoplastic resin and the elastomer constituting the thermoplastic elastomer composition usable in the present invention, any of those described above can be used as the thermoplastic resin. Examples of the elastomer preferably usable include: diene rubbers and their hydrogenated products [for example, natural rubbers (NR), isoprene rubber (IR), epoxidized natural rubbers, styrene-butadiene rubber (SBR), butadiene rubbers (BR, high-cis BR, and low-cis BR), nitrile rubber (NBR), hydrogenated NBR, and hydrogenated SBR]; olefin-based rubbers [for example, ethylene propylene rubbers (EPDM and EPM), maleic acid-modified ethylene propylene rubber (M-EPM), butyl rubber (IIR), copolymers of isobutylene and aromatic vinyl or diene monomer, acrylic rubber (ACM), and ionomers]; halogen-containing rubbers [for example, Br-IIR, CI-IIR, brominated isobutylene para-methylstyrene copolymers (Br-IPMS), chloroprene rubber (CR), hydrin rubber (CHR), chlorosulfonated polyethylene rubber (CSM), chlorinated polyethylene rubber (CM), and maleic acid-modified chlorinated polyethylene rubber (M-CM)]; silicone rubbers [for example, methyl vinyl silicone rubber, dimethyl silicone rubber, and methylphenylvinyl silicone rubber]; sulfur-containing rubbers [for example, polysulfide rubber]; fluororubbers [for example, vinylidene fluoride-based rubbers, fluorine-containing vinyl ether-based rubbers, tetrafluoroethylene-propylene-based rubbers, fluorine-containing silicone-based rubbers, and fluorine-containing phosphazene-based rubbers]; thermoplastic elastomers [for example, styrene-based elastomers, olefin-based elastomers, ester-based elastomers, urethane-based elastomers, and polyamide-based elastomers]; and the like.

Moreover, at the time of blending in a combination of a specific one of the above-mentioned thermoplastic resins and a specific one of the above-mentioned elastomers, an appropriate compatibilizer may be used as a third component to make the thermoplastic resin and the elastomer compatible with each other if they are incompatible with each other. The interfacial tension between the thermoplastic resin and the elastomer decreases when such a compatibilizer is mixed in the blend system. As a result, the size of elastomer particles constituting the dispersion layer becomes finer. Accordingly, these two components exhibit their characteristics more effectively. In general, such a compatibilizer may have a copolymer structure including both or either of a structure of the thermoplastic resin and a structure of the elastomer, or a copolymer structure including an epoxy group, a carbonyl group, a halogen group, an amino group, an oxazoline group, a hydroxyl group, or the like which is capable of reacting with the thermoplastic resin or the elastomer. Such a compatibilizer may be selected depending on the types of the thermoplastic resin and the elastomer with which the compatibilizer is blended. Examples of the compatibilizer normally used include: styrene/ethylene-butylene block copolymers (SEBS) and their maleic acid-modified products; EPDM; EPM; EPDM/styrene or EPDM/acrylonitrile graft copolymers and their maleic acid-modified products; styrene/maleic acid copolymers; reactive phenoxine; and the like. The blending proportion of such a compatibilizer is not particularly limited, yet the blending proportion is preferably 0.5 to 10 parts by weight per 100 parts by weight of the polymer components (the total amount of the thermoplastic resin and the elastomer).

In the thermoplastic elastomer composition obtained by blending the thermoplastic resin and the elastomer, the composition ratio of the specific thermoplastic resin to the specific elastomer is not particularly limited. This composition ratio may be set as appropriate in order that the thermoplastic elastomer composition can have a structure in which the elastomer is dispersed as a discontinuous phase in the matrix of the thermoplastic resin. This composition ratio is preferably in a range of 90/10 to 30/70 in weight ratio.

In the present invention, the thermoplastic resin and the thermoplastic elastomer composition obtained by blending the thermoplastic resin and the elastomer may be mixed with other polymers such as the compatibilizer, as long as the other polymers do not impair the characteristics needed for the air permeation preventing layer. The purposes of mixing such other polymers are to improve the compatibility between the thermoplastic resin and the elastomer, to improve molding processability of the materials, to improve heat resistance, to reduce costs, and so on. Examples of materials used for such other polymers include polyethylene (PE), polypropylene (PP), polystyrene (PS), ABS, SBS, polycarbonate (PC), and the like. In addition, a filler (calcium carbonate, titanium oxide, alumina, or the like) generally blended in the polymer blend, a reinforcing agent such as carbon black and white carbon, a softener, a plasticizer, a processing aid, a pigment, a dye, an antioxidant, and the like may be blended optionally as long as the blended materials do not impair the characteristics needed for the inner liner. The thermoplastic elastomer composition has a structure in which the elastomer is dispersed as a discontinuous phase in the matrix of the thermoplastic resin. Having such a structure, this thermoplastic elastomer composition can provide the inner liner both with sufficient flexibility and with sufficient rigidity based on the effect of a resin layer as a continuous phase. At the same time, when this thermoplastic elastomer composition is molded, the thermoplastic elastomer composition can achieve the molding processability equivalent to that of the thermoplastic resin, regardless of the amount of the elastomer.

The Young's modulus of each of the thermoplastic resin and the elastomer usable in the present invention is not particularly limited, yet is set preferably to 1 to 500 MPa and more preferably to 50 to 500 MPa.

### [EXAMPLES]

Hereinbelow, the pneumatic tire of the present invention will be described specifically with reference to examples and the like.

Note that the durability of each pneumatic tire was evaluated by observing a condition of occurrence of a crack in the tie rubber around the splice portion of the inner liner layer in the cavity of the test tire.

The effect on durability was judged by sorting the results as follows: "x: fail" was given to one having at least one visually-recognizable crack, while "○: pass" was given to one having no cracks. Table 1 shows the results as "○" or "X".

### Examples 1 to 5 and Comparative Example 1

As each test tire, 215/70R15 having a tire structure with two belt layers and two carcass layers was prepared. Two tires were prepared for each Example and Comparative Example. Each tire was mounted on a standard rim specified in JATMA and subjected to a running test under a forced condition on a metal drum with a tire inner pressure of 240 kPa and application of an extremely large load of 7.35 kN. The running speed was set to 80 km/h and the running distance was set to 50,000 km.

In each of the test tires of Examples 1 to 5, the structure of the perforated portion formed in the air permeation preventing layer was a through-hole provided only in the surface on the cavity side as shown in Fig. 2. The regions in which the perforated portion was provided were provided as regions (Za in Fig. 5: 60 mm) covering a width of 60 mm respectively from both ends, in the tire widthwise direction, of the belt layer with the largest belt width toward the bead parts. The percentage of the perforated portions V present was varied as listed in Table 1.

Table 1 shows details of the test tires and results of the durability evaluation.

As can be seen from this Table 1, the pneumatic tires according to the present invention have no crack occurrence and have quite excellent durability.

**[Table 1]**

| | Comparative Example 1 | Example 1 | Example 2 | Example 3 | Example 4 | Example 5 |
|---|---|---|---|---|---|---|
| Thickness of Air permeation preventing layer (mm) | 0.1 | 0.1 | 0.1 | 0.1 | 0.1 | 0.1 |
| Thickness of Tie rubber layer (mm) | 0.7 | 0.7 | 0.7 | 0.7 | 0.7 | 0.7 |
| Presence of Perforated Portion in Air permeation preventing layer | Not present | Present | Present | Present | Present | Present |
| Shape of Perforated Portion | - | elliptical | elliptical | elliptical | elliptical | elliptical |
| Percentage of Perforated Portions Present (%) | 0 | 2 | 5 | 15 | 80 | 300 |
| Result of Evaluation of Durability Test | × | ○ | ○ | ○ | ○ | ○ |

### EXPLANATION OF REFERENCE NUMERALS

1 laminated sheet
2 sheet of thermoplastic resin or thermoplastic elastomer composition obtained by blending the thermoplastic resin and an elastomer
2a air permeation preventing layer
3 tie rubber layer
4 portion near tip of sheet 2 of thermoplastic resin or thermoplastic elastomer composition
10 inner liner layer
11 tread part
12 side wall part
13 bead part
14 carcass layer
15 belt layer
A cavity-side end of splice portion of air permeation preventing layer
C spot inside tie rubber layer where crack occurs frequently
D tire circumferential direction
E tire widthwise direction
Lv length of perforated portion V in tire widthwise direction
V perforated portion formed in air permeation preventing layer 2a
S lap splice portion

## Claims

1. A pneumatic tire which uses, as an inner liner layer, a laminated sheet obtained by laminating a tie rubber layer and an air permeation preventing layer made of any one of a thermoplastic resin and a thermoplastic elastomer composition containing a blend of the thermoplastic resin and an elastomer, **characterized in that** a perforated portion penetrating the air permeation preventing layer is formed within a range of 25 mm, on at least either side in a tire circumferential direction, from a cavity-side end A of a splice portion of the air permeation preventing layer.

2. The pneumatic tire according to claim 1, **characterized in that** a total of lengths, in a tire widthwise direction, of the perforated portions formed within the range of 25 mm, on at least either side in the tire circumferential direction, from the cavity-side end A of the splice portion of the air permeation preventing layer is no less than 2% of a length of the air permeation preventing layer in the widthwise direction.

3. The pneumatic tire according to any one of claims 1 and 2, **characterized in that**
the pneumatic tire comprises at least one belt layer at a tire outer circumferential side of the inner liner layer, and
the perforated portion is formed in the air permeation preventing layer in regions covering a width of at least 60 mm respectively from both ends, in the tire widthwise direction, of a belt layer with the largest belt width toward bead parts.
